# EUROPEAN PATENT SPECIFICATION

(11) **EP 0 949 405 B1**
(45) Date of publication and mention of the grant of the patent: **31.05.2006**
(21) Application number: 99106503.8
(22) Date of filing: 30.03.1999
(51) Int. Cl.: F01K 23/10

(54) **Turbine plant**
Turbinenanlage
Centrale à turbines

(30) Priority: 07.04.1998 JP 9466298; 07.04.1998 JP 9466398
(43) Date of publication of application: 13.10.1999
(73) Proprietor: MITSUBISHI HEAVY INDUSTRIES, LTD., Tokyo 100-0005 (JP)
(72) Inventor: Sugishita, Hideaki, c/o Takasago R & D Center, Arai-cho, Takasago-shi, Hyogo-ken (JP); Mori, Hidetaka, c/o Takasago R & D Center, Arai-cho, Takasago-shi, Hyogo-ken (JP); Fukue, Ichiro, c/o Takasago Machinery Works, Arai-cho, Takasago-shi, Hyogo-ken (JP); Uematsu, Kazuo, c/o Takasago Machinery Works, Arai-cho, Takasago-shi, Hyogo-ken (JP)
(74) Representative: Henkel, Feiler & Hänzel

(56) References cited:
- EP-A- 0 831 205
- WO-A-97/44574
- US-A- 5 175 995
- US-A- 5 669 216
- PATENT ABSTRACTS OF JAPAN vol. 016, no. 519 (M-1330), 26 October 1992 (1992-10-26) & JP 04 191418 A (MITSUBISHI HEAVY IND LTD), 9 July 1992 (1992-07-09)

## Description

### BACKGROUND OF THE INVENTION:

### Field of the Invention:

The present invention relates to a turbine plant using fossil fuel including methanol and the like.

### Description of the Prior Art:

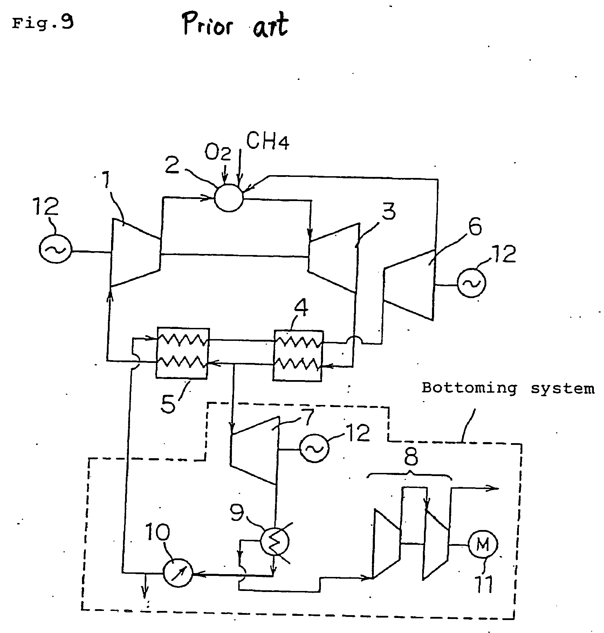

Fig. 9 is a diagrammatic view of a prior art combined cycle power plant, using pure oxygen as oxidizing agent and methane as fuel, which has been disclosed from the Graz Institute of Technology. In the figure, numeral 1 designates a compressor, which compresses a mixture gas of steam and carbon dioxide as working fluid to a pressure decided by an entire system optimization study. Numeral 2 designates a combustor, which is supplied, with oxygen needed for an equivalent combustion of the methane as fuel to generate a high temperature high pressure combustion gas, wherein component of the combustion gas is carbon dioxide and steam. Numeral 3 designates a high temperature turbine, which expands the high temperature high pressure combustion gas to obtain a work. Numerals 4, 5 designate heat exchangers, respectively, and a condensed water produced at a bottoming system from an exhaust gas of the high temperature turbine 3 extracted at a midpoint between the heat exchangers 4, 5 is heated at the heat exchangers 4, 5 to generate a high temperature high pressure steam. Numeral 6 designates a high pressure turbine, which expands the high temperature high pressure steam generated at the heat exchangers 4, 5 approximately to an inlet pressure of the combustor 2 to obtain a work as well as to send the steam so expanded to be mixed into an inlet of the combustor 2. Remaining exhaust steam of the high temperature turbine 3 which has passed through the heat exchangers 4, 5 with its temperature having been reduced returns to an inlet of the compressor 1.

Numeral 7 designates a low pressure turbine, which expands the combustion gas extracted at the midpoint between the heat exchangers 4, 5 approximately to vacuum to obtain a work. Numeral 8 designates a carbon dioxide compressor (vacuum pump), which compresses the mixture gas containing entire amount of the carbon dioxide generated at the combustor 2 approximately to the atmospheric pressure to thereby discharge the carbon dioxide as a combustion-generated product outside of the system. Numeral 9 designates a condenser, in which an outlet gas of the low pressure turbine 7 which has been pressure-reduced by the carbon dioxide compressor (vacuum pump) 8 is heat-exchanged by the sea water or the like to be temperature-reduced so that the steam is liquefied. The liquefied water is pressurized by a pressure pump 10 to -be fed into the heat exchangers 4, 5 to thereby become the high temperature high pressure steam. The steam as the combustion-generated product which has been expanded at the low pressure turbine 7 is mostly liquefied to water at the condenser 9 and remaining portion thereof becomes a drain in the process of being compressed by the vacuum pump 8 approximately to the atmospheric pressure to be discharged outside of the system.

In the prior art combined cycle power plant as mentioned above, while the high temperature combustion gas having the component of carbon dioxide and steam is obtained using the methane as fuel and oxygen, it is also possible to use a methanol (CH₃OH) fuel or other fossil fuels, but in this case, it has been a problem that the gross thermal efficiency is low.

Such a plant is described in document WO97/44574.

JP 04191418 A discloses a turbine plant with a compressor, a combustor and a gas turbine. The combustor is supplied with pure O₂ produced by an oxygen producing device and compressed by a separate compressor and by CO₂ and burning fuel. Exhaust gas of the gas turbine is thermally utilized for steam production in a heat-recovery boiler, cooled by an exhaust gas condenser and circulated to the compressor as suction gas.

US-A-5 175 995 discloses another power generation plant where the fuel supplied to the combustor is burned therein in the presence of oxygen instead of air, too. A turbine exhaust gas is fed into a waste heat boiler to carry out heat exchanging operation therein and an exhaust gas mainly including Water components and carbon dioxide from the waste heat boiler is fed into a condenser. The gas component mainly including the carbon dioxide is separated from the condensate in the water-gas separator and recovered without emitting the same into the atmosphere. The separated gas component mainly including the carbon dioxide is fed into the combustor in a compressed state. The separated condensate is fed into the waste heat boiler to be subjected to heat exchanging operation therein to generate a super heated steam which is to be fed into the combustor.

### SUMMARY OF THE INVENTION:

In view of the problem in the prior art, therefore, it is an object of the present invention to improve the prior art combined cycle power plant using the methane fuel so that a turbine plant using methanol fuel or other fossil fuels is obtained, gross thermal efficiency thereof is more enhanced than that of the prior art combined cycle power plant and reliability of the turbine plant is also enhanced.

In order to attain said object, the present invention provides the turbine plant defined in claim 1, 2, or 3.

Preferred embodiments are defined in the dependent claims.

In the invention of claim 1, the reformer reform the mixture of methanol (CH₃OH) and water (H₂O) into hydrogen (H₂) and carbon dioxide (CO₂), thereby the gross thermal efficiency is enhanced. Further, the high temperature portion of the high temperature turbine can be cooled by the high temperature turbine cooling system, thereby reliability of the high temperature turbine is enhanced.

In a preferred embodiment of the invention, there is provided the regenerative heat exchanger, thereby the combustor inlet gas temperature is elevated, the fuel flow rate is reduced and the-gross thermal efficiency is enhanced.

In another embodiment of the invention, the low pressure turbine and the CO₂ compressor of the bottoming system are eliminated, whereby the construction cost can be reduced more. Further, the compressor inlet temperature is reduced and the power of the compressor is reduced, thereby the gross thermal efficiency is enhanced.

In another embodiment said bottoming system comprises a water condensing system and a CO₂ compressor having no low pressure turbine therein and is constructed such that the condensed water from said bottoming system is partly led into the inlet of said compressor as the working fluid; and the exhaust gas from said high temperature turbine after so heat-exchanged at said heat exchanger is led into a condenser of said bottoming system.

Thereby, the high temperature turbine outlet pressure is reduced and the high temperature turbine outlet temperature is reduced, thereby the anti-creep life of the final stage moving blade of the high temperature turbine can be elongated. Also, the low pressure turbine is eliminated, thereby the construction cost is reduced. Further, the compressor inlet temperature is reduced and the power of the compressor is reduced, thereby the gross thermal efficiency is enhanced.

In the invention of claim 2 the compressor comprises a low pressure compressor and a high pressure compressor, whereby the low pressure compressor outlet gas is temperature-reduced and the compression power is reduced, thereby the gross thermal efficiency is enhanced and reliability of the disc strength of the high pressure compressor outlet portion is enhanced. Also, the combustor inlet gas temperature is reduced, thereby reliability of the high temperature portion of the combustor is enhanced. Further, by the high temperature turbine cooling system, reliability of the high temperature turbine is also enhanced. Also, not only the methanol fuel but also other fossil fuels can be used and the surplus gas generated at an iron making plant etc. or the coal gasified fuel will be effective.

In the invention of claim 3, the combustor inlet gas temperature is elevated by the regenerative hat exchanger and the fuel flow rate is reduced, thereby the gross thermal efficiency is enhanced. Also, the high temperature portion of the high temperature turbine is cooled by the high temperature turbine cooling system, thereby reliability of the high temperature turbine is enhanced. Also, not only the methanol fuel but also other fossil fuels can be used and the surplus gas generated at an iron making plant etc. or the coal gasified gas will be effective.

As a summary of the effects, as compared with the prior art turbine plant, herebelow mentioned remarkable effects can be obtained;
enhancement of the gross thermal efficiency,
enhancement of the reliability of the high temperature turbine by cooling of the high temperature turbine,
enhancement of the reliability of the combustor high temperature portion by reduction of the combustor inlet gas temperature,
enhancement of the disc strength of the high pressure compressor outlet portion,
reduction of the construction cost by elimination of the low pressure turbine and/or the high pressure turbine, etc.

Also, the present invention is effective not only for the methanol fuel but also for other fossil fuels including the surplus gas generated at an iron making plant and the coal gasified fuel.

### BRIEF DESCRIPTION OF THE DRAWINGS:

Fig. 1 is a diagrammatic view of a turbine plant of a first embodiment according to the present invention.
Fig. 2 is a diagrammatic view of a turbine plant of a second embodiment according to the present invention.
Fig. 3 is a diagrammatic view of a turbine plant of a third embodiment according to the present invention.
Fig. 4 is a diagrammatic view of a turbine plant of a fourth embodiment according to the present invention.
Fig. 5 is a diagrammatic view of a turbine plant of a fifth embodiment according to the present invention.
Fig. 6 is a diagrammatic view of a turbine plant of a sixth embodiment according to the present invention.
Fig. 7 is a diagrammatic view of a turbine plant of a seventh embodiment according to the present invention.
Fig. 8 is a diagrammatic view of a turbine plant of a eighth embodiment according to the present invention.
Fig. 9 is a diagrammatic view of a turbine plant in the prior art.

### DESCRIPTION OF THE PREFERRED EMBODIMENTS:

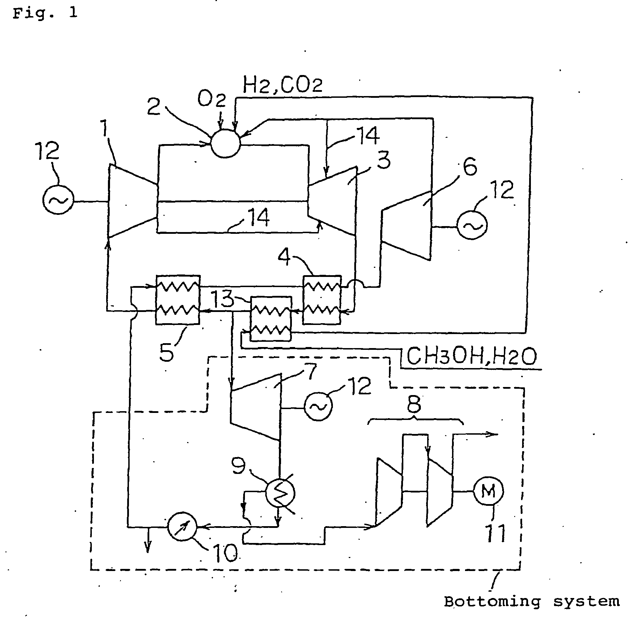

Herebelow, embodiments according to the present invention will be described concretely with reference to figures. Fig. 1 is a diagrammatic view of a turbine plant of a first embodiment according to the present invention, wherein a turbine plant using a methanol fuel is shown. The turbine plant using the methanol fuel of the present embodiment comprises a reformer 13 in addition to the system in the prior art shown in Fig. 9 and the methanol fuel is supplied into the combustor 2 via the reformer 13.

In the reformer 13, a mixture of the methanol (CH₃OH) as fuel and water (H₂O) can be reformed into hydrogen (H₂) and carbon dioxide (CO₂) by heat of absorption Q at the reformer 13, wherein the following reaction formula takes place in the reformer 13;

CH₃OH + H₂O + Q → H₂ + CO₂

In said reaction formula, the heat of absorption Q is given by heat exchange at the reformer 13. Thereby, a same effect is obtained as that of a fuel heating system in which fuel is heated so that fuel flow rate thereof is reduced and gross thermal efficiency thereof is enhanced in a gas turbine using an ordinary natural gas as fuel. Hence, by said reforming, the gross thermal efficiency can be enhanced.

Also, in the combustor 2, a mixture gas of the hydrogen (H₂) and carbon dioxide generated by the reforming reacts on oxygen which is necessary for an equivalent combustion of the hydrogen to become a high temperature mixture gas of steam (H₂O) and carbon dioxide (CO₂). This reaction is as follows, wherein working fluid is same as that of the prior art shown in Fig. 9.

H₂ + CO₂ + 1/2 O₂ → H₂O + CO₂

Further, in order to cool a high temperature portion of the high temperature turbine 3, cooling medium 14 (mixture gas of steam and carbon dioxide) for the high temperature turbine 3 is used being extracted from an outlet of the high pressure turbine 6 and from an outlet of the compressor 1. Construction of other portions is same as that of the prior art shown in Fig. 9.

According to the present first embodiment, the reformer 13 can reform the mixture of methanol (CH₃OH) as fuel and water (H₂O) into hydrogen (H₂) and carbon dioxide (CO₂) by the heat of absorption O there. The heat of absorption Q at the reformer 13 has same effect as the fuel heating system in which fuel is heated so that fuel flow rate thereof is reduced and the gross thermal efficiency is thereby enhanced in a gas turbine using ordinary natural gas as fuel, hence the effect to enhance the gross thermal efficiency can be obtained.

Also, the cooling medium 14 (mixture gas of steam and carbon dioxide) is extracted from the outlet of the high pressure turbine 6 and the outlet of the compressor 1, thereby the effect to cool the high temperature portion of the high temperature turbine 3 and to enhance the reliability of the high temperature turbine 3 can be obtained.

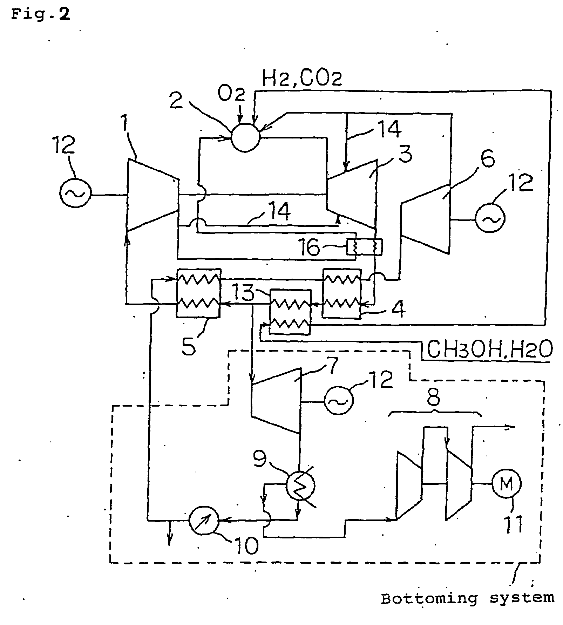

Fig. 2 is a diagrammatic view of a turbine plant of a second embodiment according to the present invention. In the present embodiment, as compared with the first embodiment shown in Fig. 1, a regenerative heat exchanger 16 is provided on a downstream side of the high temperature turbine 3 so that a compressor 1 outlet gas is heat-exchanged with a high temperature turbine 3 exhaust gas, thereby a combustor 2 inlet gas temperature is elevated, fuel flow rate is reduced and the gross thermal efficiency is enhanced. Construction of other portion is same as that shown in Fig. 1 with description thereon being omitted.

According to the present embodiment, by the regenerative heat exchanger 16 being provided, the combustor 2 inlet gas temperature is elevated more than in the first embodiment of Fig. 1, the fuel flow rate is reduced further and the effect to enhance the gross thermal efficiency further can be obtained. Other effect of the second embodiment is same as that of the first embodiment.

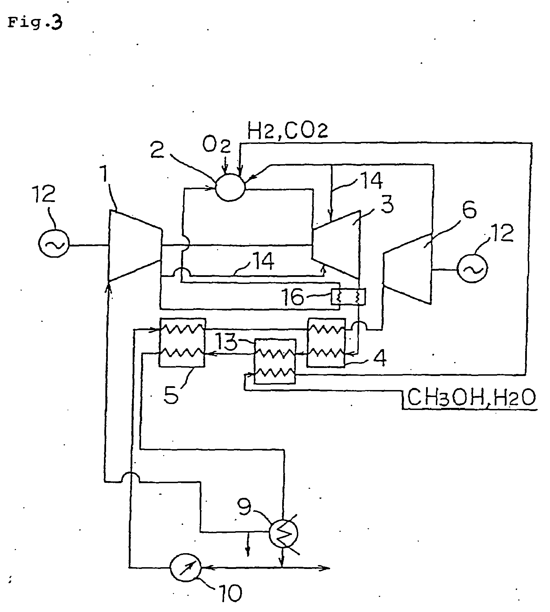

Fig. 3 is a diagrammatic view of a turbine plant of a third embodiment according to the present invention. In the present embodiment, as compared with the second embodiment shown in Fig. 2, the low pressure turbine 7 and CO₂ compressor 8 with motor 11 of the bottoming system are eliminated so that construction cost thereof is reduced. Thereby, a supply system to the condenser 9 is modified so that supply therefor is done from a heat exchanger 5 outlet. Thus, a supply line to the compressor 1 is modified so that supply therefor is done from a condenser 9 outlet. Construction of other portions is same as that of the second embodiment shown in Fig. 2.

According to the present embodiment, the low pressure turbine 7 and the CO₂ compressor 8 with motor 11 of the bottoming system in the second embodiment are eliminated, thereby the effect to reduce the construction cost can be obtained. Also, the effect to reduce the compressor 1 inlet gas temperature, to reduce the power of the compressor 1 and to enhance the gross thermal efficiency can be obtained. Other effect of the third embodiment is same as that of the second embodiment shown in Fig. 2.

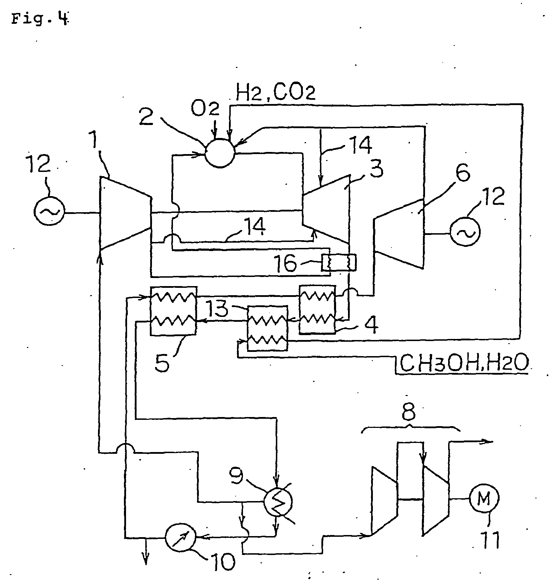

Fig. 4 is a diagrammatic view of a turbine plant of a fairth embodiment according to the present invention. In the present embodiment, as compared with the second embodiment shown in Fig. 2, outlet pressure of the high temperature turbine 3 is reduced and outlet temperature of the high temperature turbine 3 is also reduced, thereby anti-creep life of a final stage moving blade of the high temperature turbine 3 is elongated. Also, the low pressure turbine 7 is eliminated, thereby construction cost thereof is reduced. Further, a supply system to the condenser 9 is modified so that supply therefor is done from a heat exchanger 5 outlet. Thus, a supply line to the compressor 1 is modified so that supply therefor is done from a condenser 9 outlet. Construction of other portions is same as that of the second embodiment shown in Fig. 2.

According to the present embodiment, as mentioned above, the effect to elongate the anti-creep life of the final stage moving blade of the high temperature turbine 3 can be obtained. Also, the low pressure turbine 7 being eliminated, the effect to reduce the construction cost can be obtained. Further, the effect to reduce the compressor 1 inlet gas temperature, to reduce the power of the compressor 1 and to enhance the gross thermal efficiency can be obtained. Other effect of the fourth embodiment is same as that of the second embodiment.

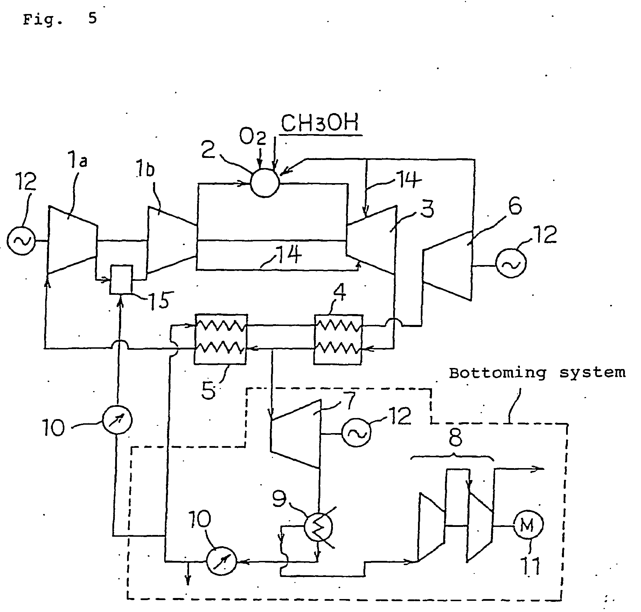

Fig. 5 is a diagrammatic view of a turbine plant of a fifth embodiment according to the present invention. In the present embodiment, which uses methanol as fuel, an intercooler 15 is added to the prior art example shown in Fig. 9. That is, the compressor 1 of the prior art example shown in Fig. 9 is divided into a low pressure compressor 1a and a high pressure compressor 1b and further an intercooler 15 is provided therebetween. In this intercooler 15, a low pressure compressor 1a outlet gas (a high pressure compressor 1b inlet gas) is mixed with the pressurized water which has been pressurized approximately to a low pressure compressor 1a outlet pressure by the pressure pump 10 to be temperature-reduced so that a compression power of the high pressure compressor 1b is reduced and a gross thermal efficiency is enhanced. Also, a high pressure compressor 1b outlet temperature is reduced, thereby reliability of a disc strength of a high pressure compressor 1b outlet portion is enhanced and further, a combustor 2 inlet gas temperature being reduced, reliability of the high temperature portion of the combustor 2 can be enhanced.

Also, in the combustor 2, methanol (CH₃OH) reacts on the oxygen (O₂) which is needed for an equivalent combustion to generate a high temperature mixture gas of steam (H₂O) and carbon dioxide (CO₂) by the following reaction formula:

CH₃OH + O₂ → CO₂ + 2H₂O + heat

Accordingly, the working fluid in this plant is carbon dioxide (CO₂) and steam (H₂O), like in the prior art case shown in Fig. 9

Also, in order to cool the high temperature portion of the high temperature turbine 3, cooling medium 14 (mixture gas of steam and carbon dioxide) is extracted from an outlet of the high pressure turbine 6 and an outlet of the compressor 1.

It is to be noted that although a case to use methanol as fuel has been described here, it is also possible to use other fossil fuels. Further, it is also effective to use a fuel of a surplus gas generated at an iron making plant or the like, a coal gasified fuel, etc.

According to the present embodiment, as mentioned above, the effect to reduce the low pressure compressor la outlet gas temperature, to reduce the compression power of the high pressure compressor 1b and to enhance the gross thermal efficiency can be obtained. Also, the effect to reduce the high pressure compressor 1b outlet temperature and to enhance the reliability of the disc strength of the high pressure compressor 1b outlet portion can be obtained.

Further, the combustor 2 inlet gas temperature being reduced, the effect to enhance the reliability of the high temperature portion of the combustor 2 can be obtained. Also, the cooling medium 14 (mixture gas of steam and carbon dioxide) being extracted from the high pressure turbine 6 outlet and the compressor 1 outlet, the effect to cool the high temperature portion of the high temperature turbine 3 and to enhance the reliability of the high temperature turbine 3 can be obtained.

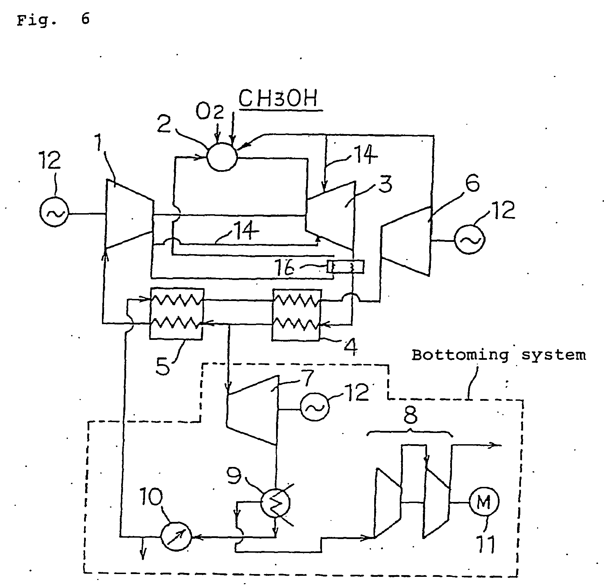

Fig. 6 is a diagrammatic view of a turbine plant of a sixth embodiment according to the present invention. In the present embodiment, a regenerative heat exchanger 16 is provided on a downstream side of the high temperature turbine 3 so that a compressor 1 outlet gas is heat-exchanged with a high temperature turbine 3 exhaust gas, thereby a combustor 2 inlet gas temperature is elevated, fuel flow rate is reduced and the gross thermal efficiency is enhanced.

Also, in order to cool the high temperature portion of the high temperature turbine 3, like in the fifth embodiment, cooling medium 14 (mixture gas of steam and carbon dioxide) is extracted from an outlet of the high pressure turbine 6 and an outlet of the compressor 1. Construction of other portions is same as that of the prior art example shown in Fig . 9.

According to the present embodiment, the combustor 2 inlet gas temperature being elevated and the fuel flow rate being reduced, the effect to enhance the gross thermal efficiency can be obtained. Also, the cooling medium (mixture gas of steam and carbon dioxide) being extracted from the high pressure turbine 6 and the compressor 1 outlet, the effect to cool the high temperature portion of the high temperature turbine 3 and to enhance the reliability of the high temperature turbine 3 can be obtained.

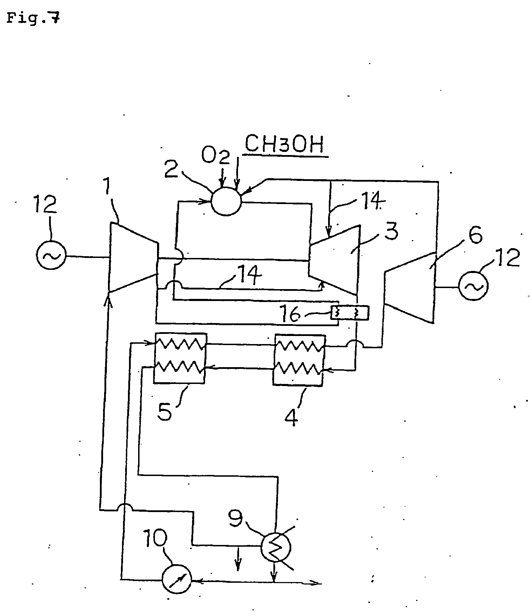

Fig. 7 is a diagrammatic view of a turbine plant of a seventh embodiment according to the present invention. In the present embodiment, as compared with the sixth embodiment shown in Fig. 6, the low pressure turbine 7 and CO₂ compressor 8 with motor 11 of the bottoming system are eliminated so that construction cost thereof is reduced. Also, a supply system to the condenser 9 is modified so that supply therefor is done from a heat exchanger 5 outlet. Thus, a supply line to the compressor 1 is modified so that supply therefor is done from a condenser 9 outlet.

According to the present embodiment, the bottoming system is eliminated, thereby the effect to reduce the construction cost can be obtained. Also, the effect to reduce the compressor 1 inlet temperature, to reduce the power of the compressor 1 and to enhance the gross thermal efficiency can be obtained. Other effect of the seventh embodiment is same as that of the sixth embodiment shown in Fig. 6.

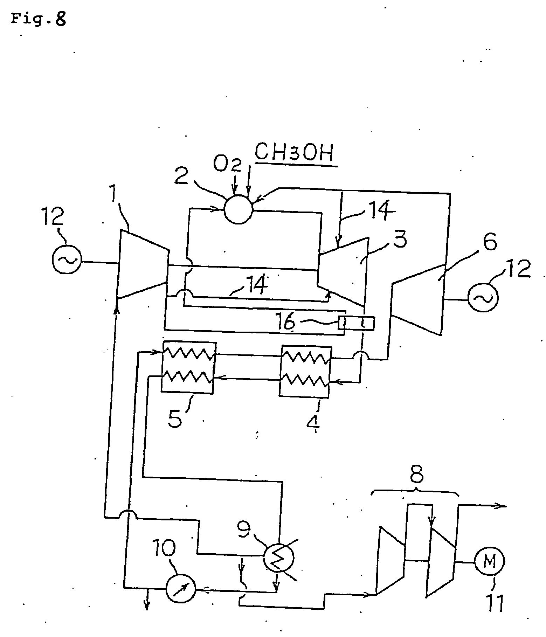

Fig. 8 is a diagrammatic view of a turbine plant of a eighth embodiment according to the present invention. In the present embodiment, as compared with the sixth embodiment shown in Fig. 6, outlet pressure of the high temperature turbine 3 is reduced and outlet temperature of the high temperature turbine 3 is also reduced, thereby anti-creep life of a final stage moving blade of the high temperature turbine 3 is elongated. Also, the low pressure turbine 7 is eliminated, thereby construction cost thereof is reduced. Further, a supply system to the condenser 9 is modified so that supply therefor is done from a heat exchanger 5 outlet. Thus, a supply line to the compressor 1 is modified so that supply therefor is done from a condenser 9 outlet. Construction of other portions is same as that of the sixth embodiment shown in Fig. 6.

According to the present embodiment, as mentioned above, the effect to elongate the anti-creep life of the final stage moving blade of the high temperature turbine 3 can be obtained. Also, the low pressure turbine 7 being eliminated, the effect to reduce the construction cost can be obtained. Further, the effect to reduce the compressor 1 inlet gas temperature, to reduce the power of the compressor 1 and to enhance the gross thermal efficiency can be obtained.

## Claims

1. A turbine plant comprising
a compressor (1) for compressing a mixture gas of steam and carbon dioxide as a working fluid;
a combustor (2) for burning a fuel together with the working fluid from said compressor (1) added with oxygen;
a high temperature turbine (3) for expanding a combustion gas from said combustor (2) to obtain a work;
a bottoming system comprising a water condensing system;
a heat exchanger (4,5) for heating a condensed water from said bottoming system to a high temperature steam by a heat exchange with the exhaust gas from said high temperature turbine (3) and for leading said exhaust gas after used for the heat exchange into an inlet of said compressor (1) as the working fluid; and
a high pressure turbine (6) for expanding the high temperature steam of said bottoming system heated at said heat exchanger (4,5) to obtain a work and for mixing the steam so expanded into said combustor (2);
**characterized in** further comprising
a reformer (13) for receiving a mixture of methanol and water to be reformed into hydrogen and carbon dioxide by heat absorbed at said heat exchanger (4) and for supplying said hydrogen and carbon dioxide into said combustor (2) as a fuel; and
a high temperature turbine cooling system which extracts the working fluid from an outlet of said compressor (1) and an outlet of said high pressure turbine (6) to be led into a high temperature portion of said high temperature turbine (3) for cooling thereof as a cooling medium.

2. A turbine plant comprising
a compressor (1) for compressing a mixture gas of steam and carbon dioxide as a working fluid;
a combustor (2) for burning a fossil fuel including methanol together with the working fluid from said compressor (1) added with oxygen;
a high temperature turbine (3) for expanding a combustion gas from said combustor (2) to obtain a work;
a bottoming system for driving a low pressure turbine (7) by an exhaust gas from said high temperature turbine (3) to obtain work;
a heat exchanger (4,5) for heating a condensed water from said bottoming system to a high temperature steam by a heat exchange with the exhaust gas from said high temperature turbine (3) and for leading said exhaust gas after used for the heat exchange into an inlet of said compressor (1) as the working fluid; and
a high pressure turbine (6) for expanding the high temperature steam of said bottoming system heated at said heat exchanger (4,5) to obtain a work and for mixing the steam so expanded into said combustor (2);
**characterized in that**
said compressor (1) comprises a low pressure compressor (1a) and a high pressure compressor (1b) and is constructed such that there is provided between said low pressure compressor (1a) and said high pressure compressor (1b) a passage for flowing therethrough the working fluid via an intercooler (15); and
a portion of the condensed water from said bottoming system is mixed into said intercooler (15) under pressure;
and there is provided a high temperature turbine cooling system which extracts the working fluid from an outlet of said high pressure compressor (1b) and an outlet of said high pressure turbine (6) to be led into a high temperature portion of said high temperature turbine (3) for cooling thereof as a cooling medium.

3. A turbine plant comprising
a compressor (1) for compressing a mixture gas of steam and carbon dioxide as a working fluid;
a combustor (2) for burning a fossil fuel including methanol together with the working fluid from said compressor (1) added with oxygen;
a high temperature turbine (3) for expanding a combustion gas from said combustor (2) to obtain a work;
a bottoming system comprising a water condensing system;
a heat exchanger (4,5) for heating a condensed water from said bottoming system to a high temperature steam by a heat exchange with the exhaust gas from said high temperature turbine (3) and for leading said exhaust gas after used for the heat exchange into an inlet of said compressor (1) as the working fluid; and
a high pressure turbine (6) for expanding the high temperature steam of said bottoming system heated at said heat exchanger (4,5) to obtain a work and for mixing the steam so expanded into said combustor (2) ;
**characterized in that**
there is provided between the outlet of said compressor (1) and an inlet of said combustor (2) a regenerative heat exchanger (16) for elevating a combustor (2) inlet gas temperature by a heat exchange between an outlet gas of said compressor (1) and the exhaust gas from said high temperature turbine (3) ; and
there is provided a high temperature turbine cooling system which extracts the working fluid from an outlet of said compressor (1) and an outlet of said high pressure turbine (6) to be led into a high temperature portion of said high temperature turbine (3) for cooling thereof as a cooling medium.

4. A turbine plant as claimed in claim 1 **characterized in that** there is provided between the outlet of said compressor (1) and an inlet of said combustor (2) a regenerative heat exchanger (16) for elevating a combustor (2) inlet gas temperature by a heat exchange between an outlet gas of said compressor (1) and the exhaust gas from said high temperature turbine (3).

5. A turbine plant as claimed in claim 1, 3 or 4,
**characterized in that**
said bottoming system comprises only the water condensing system and is constructed such that the condensed water from said bottoming system is partly led into the inlet of said compressor (1) as the working fluid; and
the exhaust gas from said high temperature turbine (3) after so heat-exchanged at said heat exchanger (4,5) is led into a condenser (9) of said bottoming system.

6. A turbine plant as claimed in claim 1, 3 or 4,
**characterized in that**
said bottoming system comprises the water condensing system and a CO₂ compressor (8) and is constructed such that the condensed water from said bottoming system is partly led into the inlet of said compressor (1) as the working fluid; and
the exhaust gas from said high temperature turbine (3) after so heat-exchanged at said heat exchanger (4,5) is led into a condenser (9) of said bottoming system.

7. A turbine plant as claimed in claim 1, 3 or 4, **characterized in that** said bottoming system comprises a low pressure turbine (7) driven by an exhaust gas from said high temperature turbine (3) to obtain work.

## Patentansprüche

1. Turbinenkraftwerk mit
einem Kompressor (1) zum Komprimieren eines Gasgemischs aus Dampf und Kohlendioxid als Arbeitsfluid,
einer Brennkammer (2) zum Verbrennen eines Brennstoffs zusammen mit dem mit Sauerstoff angereicherten Arbeitsfluid aus dem Kompressor (1),
einer Hochtemperaturturbine (3) zum Expandieren eines Verbrennungsgases aus der Brennkammer (2), um Arbeit bzw. Leistung zu erhalten,
einem Nachschaltsystem ("bottoming system") mit einem Wasserkondensiersystem,
einem Wärmetauscher (4,5) zum Erwärmen eines Kondenswassers aus dem Nachschaltsystem auf einen Hochtemperaturdampf durch Wärmetausch mit dem Abgas aus der Hochtemperaturturbine (3) und zum Leiten des Abgases nach seiner Nutzung für den Wärmetausch in einen Einlaß des Kompressors (1) als Arbeitsfluid, und
einer Hochdruckturbine (6) zum Expandieren des an dem Wärmetauscher (4,5) erwärmten Hochdruckdampfs des Nachschaltsystems, um Arbeit bzw. Leistung zu erhalten, und zum Mischen des so expandierten Dampfs in die Brennkammer (2),
**dadurch gekennzeichnet, dass** es ferner umfaßt
einen Reformer (13) zum Aufnehmen eines Gemischs von Methanol und Wasser, das durch am Wärmetauscher (4) aufgenommene Wärme in Wasserstoff und Kohlendioxid zu reformieren ist, und zum Zuführen des Wasserstoffs und Kohlendioxids in die Brennkammer (2) als Brennstoff, und
ein Hochtemperatur-Turbinenkühlsystem, welches das Arbeitsfluid aus einem Auslaß des Kompressors (1) und einem Auslaß der Hochdruckturbine (6) extrahiert, damit dieses als Kühlmedium in einen Hochtemperaturabschnitt der Hochtemperaturturbine (3) zu dessen Kühlung geleitet wird.

2. Turbinenkraftwerk mit
einem Kompressor (1) zum Komprimieren eines Gasgemischs aus Dampf und Kohlendioxid als Arbeitsfluid,
einer Brennkammer (2) zum Verbrennen eines fossilen Brennstoffs, der Methanol enthält, zusammen mit dem mit Sauerstoff angereicherten Arbeitsfluid von dem Kompressor (1),
einer Hochtemperaturturbine (3) zum Expandieren eines Verbrennungsgases von der Brennkammer (2), um Arbeit bzw. Leistung zu erhalten,
einem Nachschaltsystem ("bottoming system") zum Antreiben einer Niederdruckturbine (7) durch ein Abgas aus der Hochtemperaturturbine (3), um Arbeit bzw. Leistung zu erhalten,
einem Wärmetauscher (4,5) zum Erwärmen eines Kondenswassers aus dem Nachschaltsystem auf einen Hochtemperaturdampf durch Wärmetausch mit dem Abgas aus der Hochtemperaturturbine (3) und zum Leiten des Abgases nach dessen Nutzung für den Wärmetausch in einen Einlaß des Kompressors (1) als Arbeitsfluid, und
einer Hochdruckturbine (6) zum Expandieren des an dem Wärmetauscher (4,5) erwärmten Hochtemperaturdampfs des Nachschaltsystems, um Arbeit bzw. Leistung zu erhalten, und zum Mischen des so expandierten Dampfs in die Brennkammer (2),
**dadurch gekennzeichnet, dass**
der Kompressor (1) einen Niederdruckkompressor (1a) und einen Hochdruckkompressor (1b) umfasst und so aufgebaut ist, dass zwischen dem Niederdruckkompressor (1a) und dem Hochdruckkompressor (1b) ein Durchgang zum Strömen lassen des Arbeitsfluids über einen Zwischenkühler (15) vorgesehen ist, und
ein Teil des Kondenswassers aus dem Nachschaltsystem unter Druck in den Zwischenkühler (15) gemischt wird,
und ein Hochtemperatur-Turbinenkühlsystem vorgesehen ist, welches das Arbeitsfluid von einem Auslaß des Hochtemperaturkompressors (1b) und einem Auslaß der Hochdruckturbine (6) extrahiert, damit dieses als Kühlmedium in einen Hochtemperaturabschnitt der Hochtemperaturturbine (3) zu dessen Kühlung geleitet wird.

3. Turbinenkraftwerk mit
einem Kompressor (1) zum Komprimieren eines Gasgemischs aus Dampf und Kohlendioxid als Arbeitsfluid,
einer Brennkammer (2) zum Verbrennen eines fossilen Brennstoffs, der Methanol enthält, zusammen mit dem mit Sauerstoff angereicherten Arbeitsfluid von dem Kompressor (1) ,
einer Hochtemperaturturbine (3) zum Expandieren eines Verbrennungsgases von der Brennkammer (2), um Arbeit bzw. Leistung zu erhalten,
einem Nachschaltsystem ("bottoming system"), das ein Wasserkondensiersystem umfasst,
einem Wärmetauscher (4,5) zum Erwärmen eines Kondenswassers aus dem Nachschaltsystem auf einen Hochtemperaturdampf durch Wärmetausch mit dem Abgas aus der Hochtemperaturturbine (3) und zum Leiten des Abgases nach dessen Nutzung für den Wärmetausch in einen Einlaß des Kompressors (1) als Arbeitsfluid, und
einer Hochdruckturbine (6) zum Expandieren des an dem Wärmetauscher (4,5) erwärmten Hochtemperaturdampfs des Nachschaltsystems, um Arbeit bzw. Leistung zu erhalten, und zum Mischen des so expandierten Dampfs in die Brennkammer (2),
**dadurch gekennzeichnet, dass**
zwischen dem Auslaß des Kompressors (1) und einem Einlaß der Brennkammer (2) ein regenerativer Wärmetauscher (16) zum Anheben einer Einlassgastemperatur der Brennkammer (2) durch einen Wärmetausch zwischen einem Auslassgas des Kompressors (1) und dem Abgas aus der Hochtemperaturturbine (3) vorgesehen ist, und
ein Hochtemperatur-Turbinenkühlsystem vorgesehen ist, welches das Arbeitsfluid von einem Auslaß des Kompressors (1) und einem Auslaß der Hochdruckturbine (6) extrahiert, um es als Kühlmedium in einen Hochtemperaturabschnitt der Hochtemperaturturbine (3) zu deren Kühlung zu leiten.

4. Turbinenkraftwerk nach Anspruch 1, **dadurch gekennzeichnet, dass** zwischen dem Auslaß des Kompressors (1) und einem Einlaß der Brennkammer (2) ein regenerativer Wärmetaucher (16) zum Anheben einer Einlassgastemperatur der Brennkammer (2) durch einen Wärmetausch zwischen einem Auslassgas des Kompressors (1) und dem Abgas aus der Hochtemperaturturbine (3) vorgesehen ist.

5. Turbinenkraftwerk nach Anspruch 1, 3 oder 4, **dadurch gekennzeichnet, dass**
das Nachschaltsystem nur das Wasserkondensiersystem umfasst und derart aufgebaut ist, dass das Kondenswasser aus dem Nachschaltsystem teilweise in den Einlaß des Kompressors (1) als Arbeitsfluid geleitet wird, und
das Abgas aus der Hochtemperaturturbine (3), nachdem es so am Wärmetauscher (4,5) einem Wärmetausch unterzogen wurde, in einen Kondensator (9) des Nachschaltsystems geleitet wird.

6. Turbinenkraftwerk nach Anspruch 1, 3 oder 4, **dadurch gekennzeichnet, dass**
das Nachschaltsystem das Wasserkondensiersystem und einen CO₂-Kompressor (8) umfasst und so aufgebaut ist, dass das Kondenswasser aus dem Nachschaltsystem teilweise als Arbeitsfluid in den Einlaß des Kompressors (1) geleitet wird, und
das Abgas aus der Hochtemperaturturbine (3), nachdem es so einem Wärmetausch am Wärmetauscher (4,5) unterzogen wurde, in einen Kondensator (9) des Nachschaltsystems geleitet wird.

7. Turbinenkraftwerk nach Anspruch 1, 3 oder 4, **dadurch gekennzeichnet, dass** das Nachschaltsystem eine Niederdruckturbine (7) umfasst, die von einem Abgas aus der Hochtemperaturturbine (3) angetrieben wird, um Arbeit bzw. Leistung zu erhalten.

## Revendications

1. Centrale à turbine comprenant
un compresseur (1) pour comprimer un mélange gazeux de vapeur d'eau et de dioxyde de carbone comme fluide de travail ;
une chambre de combustion (2) pour brûler un combustible ensemble avec le fluide de travail provenant du compresseur (1) additionné d'oxygène ;
une turbine (3) à haute température pour détendre un gaz de combustion provenant de la chambre de combustion (2) afin d'obtenir du travail ;
un système de queue comprenant un système de condensation d'eau ;
un échangeur de chaleur (4, 5) pour chauffer de l'eau condensée provenant du système de queue en de la vapeur d'eau à haute température par échange de chaleur avec les gaz d'échappement de la turbine (3) à haute température et pour envoyer les gaz d'échappement après les avoir utilisés pour l'échange de chaleur dans une entrée du compresseur (1) en tant que fluide de travail ; et
une turbine (6) à haute pression pour détendre la vapeur d'eau à haute température du système de queue chauffée dans l'échangeur de chaleur (4, 5) pour obtenir du travail et pour mélanger la vapeur d'eau ainsi détendue en l'envoyant dans la chambre de combustion (2) ;
**caractérisée en ce qu'**elle comprend, en outre,
un reformeur (13) pour recevoir un mélange de méthanol et d'eau à reformer en hydrogène et en dioxyde de carbone par de la chaleur absorbée dans l'échangeur de chaleur (4) et pour envoyer l'hydrogène et le dioxyde de carbone dans la chambre de combustion (2) en tant que combustible ; et
un système de refroidissement de la turbine à haute température qui extrait le fluide de travail d'une sortie du compresseur (1) et d'une sortie de la turbine (6) à haute pression pour l'envoyer dans une partie à haute température de la turbine (3) à haute température en vue de la refroidir en tant que fluide de refroidissement.

2. Centrale de turbine comprenant
un compresseur (1) pour comprimer un mélange gazeux de vapeur d'eau et de dioxyde de carbone en tant que fluide de travail ;
une chambre de combustion (2) pour brûler un combustible fossile, y compris du méthanol, ensemble avec le fluide de travail provenant du compresseur (1) additionné d'oxygène ;
une turbine (3) à haute température pour détendre un gaz de combustion provenant de la chambre de combustion (2) afin d'obtenir du travail ;
un système de queue comprenant un système de condensation d'eau ;
un échangeur de chaleur (4, 5) pour chauffer de l'eau condensée provenant du système de queue en de la vapeur d'eau à haute température par échange de chaleur avec les gaz d'échappement de la turbine (3) à haute température et pour envoyer les gaz d'échappement après les avoir utilisés pour l'échange de chaleur dans une entrée du compresseur (1) en tant que fluide de travail ; et
une turbine (6) à haute pression pour détendre la vapeur d'eau à haute température du système de queue chauffée dans l'échangeur de chaleur (4, 5) pour obtenir du travail et pour mélanger la vapeur d'eau ainsi détendue en l'envoyant dans la chambre de combustion (2) ;
**caractérisée en ce que**
le compresseur (1) comprend un compresseur (1a) à basse pression et un compresseur (1b) à haute pression et est constitué de façon à prévoir entre le compresseur (1a) à basse pression et le compresseur (1b) à haute pression, un passage pour du fluide de travail par l'intermédiaire d'un refroidisseur (15) intermédiaire ; et
une partie de l'eau condensée provenant du système de queue est mélangée dans le refroidisseur (15) intermédiaire sous pression ; et
il est prévu un système de refroidissement de la turbine à haute température qui extrait le fluide de travail d'une sortie du compresseur (1b) à haute pression et d'une sortie de la turbine (6) à haute pression pour l'envoyer dans une partie à haute température de la turbine (3) à haute température pour la refroidir en tant que fluide de refroidissement.

3. Centrale de turbine comprenant
un compresseur (1) pour comprimer un mélange gazeux de vapeur d'eau et de dioxyde de carbone en tant que fluide de travail ;
une chambre de combustion (2) pour brûler un combustible fossile, y compris du méthanol, ensemble avec le fluide de travail provenant du compresseur (1) additionné d'oxygène ;
une turbine (3) à haute température pour détendre un gaz de combustion provenant de la chambre de combustion (2) afin d'obtenir du travail ;
un système de queue comprenant un système de condensation d'eau ;
un échangeur de chaleur (4, 5) pour chauffer de l'eau condensée provenant du système de queue en de la vapeur d'eau à haute température par échange de chaleur avec les gaz d'échappement de la turbine (3) à haute température et pour envoyer les gaz d'échappement après les avoir utilisés pour l'échange de chaleur dans une entrée du compresseur (1) en tant que fluide de travail ; et
une turbine (6) à haute pression pour détendre la vapeur d'eau à haute température du système de queue chauffée dans l'échangeur de chaleur (4, 5) pour obtenir du travail et pour mélanger la vapeur d'eau ainsi détendue en l'envoyant dans la chambre de combustion (2) ;
**caractérisée en ce que**
il est prévu entre la sortie du compresseur (1) et une entrée de la chambre de combustion (2) un échangeur (16) de chaleur de régénération pour élever une température de gaz d'entrée dans la chambre de combustion (2) par un échange de chaleur entre un gaz de sortie du compresseur (1) et les gaz d'échappement de la turbine (3) à haute température ; et
il est prévu un système de refroidissement de la turbine à haute température qui est extrait le fluide de travail d'une sortie du compresseur (1) et d'une sortie de la turbine (6) à haute pression pour l'envoyer dans une partie à haute température de la turbine (3) à haute température en vue de la refroidir en tant que fluide de refroidissement.

4. Centrale de turbine suivant la revendication 1, **caractérisée en ce qu'**il est prévu entre la sortie du compresseur (1) et une entrée de la chambre de combustion (2) un échangeur (16) de chaleur avec régénération pour élever une température du gaz d'entrée dans la chambre de combustion (2) par un échange de chaleur entre du gaz de sortie du compresseur (1) et les gaz d'échappement de la turbine (3) à haute température.

5. Centrale de turbine suivant la revendication 1, 3 ou 4, **caractérisée en ce que**
le système de queue comprend seulement le système de condensation d'eau et est constitué de façon à ce que l'eau condensée provenant du système de queue est envoyée en partie dans l'entrée du compresseur (1) en tant que fluide de travail ; et
le gaz d'échappement de la turbine (3) à haute température après avoir ainsi échangé de la chaleur dans l'échangeur de chaleur (4, 5) est envoyé dans un condenseur (9) du système de queue.

6. Centrale de turbine suivant la revendication 1, 3 ou 4, **caractérisée en ce que**
le système de queue comprend le système de condensation d'eau et un compresseur (8) de CO₂ et est constitué de façon à ce que l'eau condensée provenant du système de queue soit envoyée en partie dans l'entrée du compresseur (1) en tant que fluide de travail ; et
le gaz d'échappement de la turbine (3) à haute température après avoir ainsi échangé de la chaleur dans l'échangeur de chaleur (4, 5) est envoyé dans un condenseur (9) du système de queue.

7. Centrale de turbine suivant la revendication 1, 3 ou 4, **caractérisé en ce que** le système de queue comprend une turbine (7) à basse pression entraînée par un gaz d'échappement de la turbine (3) à haute température pour obtenir du travail.
